# EUROPÄISCHE PATENTANMELDUNG

(11) **EP 1 480 030 A1**
(43) Veröffentlichungstag der Anmeldung: **24.11.2004**
(21) Anmeldenummer: 04006465.1
(22) Anmeldetag: 18.03.2004
(51) Int. Cl.: G01M 1/32

(54) **Vorrichtung zum Auswuchten eines Fahrzeugrades**

(30) Priorität: 21.05.2003 DE 20308066 U
(71) Anmelder: att Automotive Testing Technologies GmbH, 77694 Kehl-Auenheim (DE)
(72) Erfinder: Gnielka, Peter, 77731 Willstätt (DE)
(74) Vertreter: Kaiser, Magnus

(57) **Zusammenfassung**

Die Erfindung betrifft eine Vorrichtung zum Auswuchten eines Fahrzeugrades, mit einer Spindel 2 zum Aufstecken eines auszuwuchtenden Rades 4, mit einem Motor 11 zum Antrieb der Spindel 2, um ein Rotieren des Rades 4 zu bewirken, mit einer der Spindel 2 zugeordneten Messeinrichtung 5, 6 zum Messen einer etwa vorhandenen Unwucht während des Rotierens des Rades 4, mit einer Auswerte- und Anzeigeeinrichtung 7 zum Berechnen und Anzeigen der Unwucht und/oder der am Rad 4 anzubringenden Ausgleichsgewichte, sowie mit einer Steuereinheit 10 zum Steuern des Motors 11. Der Motor 11 ist mit einer von der Steuereinheit 10 betätigbaren Feststellbremse 13 versehen wobei die Steuereinheit 10 solcherart mit der Auswerte- und Anzeigeeinrichtung 7 zusammenwirkend ausgebildet ist, dass sie mittels des Motors 11 das Rad 4 nach dem Messvorgang in eine zum Anbringen eines Ausgleichsgewichts definierte Winkelstellung fährt und das Rad 4 dort mittels der Feststellbremse 13 festhält.

## Beschreibung

Die Erfindung betrifft eine Vorrichtung zum Auswuchten eines Fahrzeugrades nach dem Oberbegriff des Anspruchs 1. Die Vorrichtung umfasst demnach eine Spindel zum Aufstecken eines auszuwuchtenden Rades, einen Motor zum Antrieb der Spindel, um ein rotieren des Rades zu bewirken, eine der Spindel zugeordnete Messeinrichtung zum Messen einer etwa vorhandenen Unwucht während des Rotierens des Rades, eine Auswerte- und Anzeigeeinrichtung zum Berechnen und Anzeigen der Unwucht und/oder der am Rad anzubringenden Ausgleichsgewichte, sowie eine Steuereinheit zum Steuern des Motors.

Auswuchtmaschinen dieser Art werden in Werkstätten und Reifenhandlungen weit verbreitet eingesetzt. Zum Auswuchten eines Fahrzeugrades wird dieses auf die Spindel gesteckt, dort befestigt und durch den Motor in Rotation versetzt. Soweit eine dynamische Unwucht vorhanden ist, wird diese von an der Spindellagerung angeordneten Sensoren erfasst und das hierdurch generierte Signal der Auswerteeinrichtung zugeführt. Die Auswerte- und Anzeigeeinrichtung zeigt dem Bediener üblicherweise auf einem Display an, an welcher Stelle des Rades ein Ausgleichsgewicht anzubringen ist und welche Masse dieses Ausgleichsgewicht haben muss.

Um die Unwucht möglichst vollständig auszugleichen, sind üblicherweise zwei Ausgleichsgewichte anzubringen, die in unterschiedlichen radialen Ebenen anzuordnen sind. Bei Rädern von Personenkraftwagen sind diese Ebenen normalerweise die Außenseite und die Innenseite der Radfelgen.

Nach dem Messen der vorhandenen Unwucht und dem Berechnen der Masse der notwendigen Ausgleichsgewichte sowie von deren Winkelstellungen am Felgenrand in den beiden Ebenen wird dem Bediener auf dem Display angezeigt, wie er das auf der Spindel befindliche Rad verdrehen muss, bis die Stelle, an der das Ausgleichsgewicht anzubringen ist, in einer definierten Winkelstellung steht, beispielsweise auf "12 Uhr". Dies erfolgt nacheinander für beide Ausgleichsebenen.

Insbesondere bei Stahlfelgen, bei denen die Ausgleichsgewichte mit einem Hammer am Felgenrand eingeschlagen werden, ist einige Geschicklichkeit des Bedieners von nöten, damit das Rad in der definierten Winkelstellung stehen bleibt, während das Gewicht ausgewählt, auf den Felgenrand gesetzt und dort eingeschlagen wird. Wird hier nicht sorgfältig genug gearbeitet, kann sich das Rad beim Anbringen der Gewichte verdrehen. Ein entsprechend schlechtes Auswuchtergebnis ist die Folge.

Um den Bediener bei diesem Vorgang zu unterstützen, sind Auswuchtmaschinen bekannt geworden, die mit einer mechanischen, durch ein Pedal betätigten Feststellbremse für die Spindel bzw. das Rad ausgerüstet sind. Nachdem der Bediener die definierte Winkelstellung zum Anbringen des Ausgleichsgewichts eingestellt hat, kann er das Rad mit dem Pedal festhalten, so dass ein Verdrehen desselben beim Anbringen des Ausgleichsgewichts nicht mehr zu befürchten ist. Gleichwohl ist für das Betätigen eines Pedals während des beidhändigen Hantierens mit Ausgleichsgewicht und Hammer eine gewisse Geschicklichkeit notwendig. Außerdem stellt die mechanische Bremse mit dem Pedal einen zusätzlichen Kostenfaktor beim Herstellen einer Auswuchtmaschine dar.

Der Erfindung liegt daher die Aufgabe zugrunde, eine Auswuchtvorrichtung der eingangs genannten Art für den Bediener weiter zu vereinfachen, ohne notwendigerweise die Herstellungskosten nennenswert zu erhöhen.

Gelöst ist diese Aufgabe durch eine Vorrichtung mit den Merkmalen des Anspruchs 1. Vorteilhafte Ausgestaltungen der Vorrichtung sind in den Ansprüchen 2 bis 4 niedergelegt.

Erfindungsgemäß ist also der Motor für die Spindel mit einer von der Steuereinheit betätigbaren Feststellbremse versehen, während die Steuereinheit solcherart mit der Auswerte- und Anzeigeeinrichtung zusammenwirkend ausgebildet ist, dass sie mittels des Motors das Rad nach dem Messvorgang automatisch in eine zum Anbringen eines Ausgleichsgewichts definierte Winkelstellung fährt und es dort mittels der Feststellbremse festhält.

Nach dem Messen der Unwucht wird also das Rad automatisch in diejenige Winkelstellung gebracht, in der das Ausgleichsgewicht angebracht werden soll. Üblicherweise wird dies die Stellung "12 Uhr" sein, jedoch ist auch jede andere definierte Winkelstellung denkbar. Sobald diese Winkelstellung des Rades erreicht ist, wird von der Motorsteuerung die erfindungsgemäß vorhandene Feststellbremse automatisch aktiviert, so dass die Spindel blockiert und das Rad nicht mehr weiter verdreht werden kann. Ein unbeabsichtigtes Verdrehen des Rades während des Anbringens des Ausgleichsgewichts ist daher ausgeschlossen, ohne eine zusätzliche mechanische Bremse einsetzen zu müssen und ohne dass der Bediener irgendeine zusätzliche Aktion, wie beispielsweise ein Pedal zu treten, durchführen muss. In den rauen und mitunter recht eiligen Arbeitsbedingungen einer KFZ-Werkstatt oder eines Reifenhandels ist dies ein signifikanter Vorteil.

Vorzugsweise ist die erfindungsgemäße Vorrichtung so ausgestaltet, dass das Rad zunächst zum Anbringen eines ersten Ausgleichsgewichts in einer ersten Ausgleichsebene in die dort berechnete Winkelstellung fährt und das Rad dort festhält, wobei nach dem Anbringen des ersten Ausgleichsgewichts das Rad in die für die zweite Ausgleichsebene berechnete Winkelstellung fährt und das Rad dort wiederum festhält, so dass das zweite Ausgleichsgewicht angebracht werden kann. Wenn das Auswuchten mit mehr als zwei Ausgleichsgewichten erfolgt, wie es bei Leichtmetallfelgen vorkommt, kann dieser Vorgang selbstverständlich auch mehrmals erfolgen.

Bevorzugterweise ist hierzu ein Bedienfeld vorgesehen, auf welchem eine Taste zum Lösen der Feststellbremse angebracht ist. Der Bediener kann dann also nach dem Anbringen des ersten Ausgleichsgewichts auf die Taste drücken, hiermit die Feststellbremse lösen und den zweiten Eindrehvorgang starten, mit dem das Rad in die zweite definierte Winkelstellung gedreht und dort zum Anbringen des zweiten Ausgleichsgewichts festgehalten wird.

Der erfindungsgemäß verwendete Motor ist vorzugsweise ein Gleichstrommotor mit Arretierungsfunktion, also einer elektrisch betätigbaren Feststellbremse, die durch entsprechendes Ansteuern von der Steuereinheit den Motor blockiert und somit die Spindel und das darauf befindliche Rad in der gewünschten Winkelstellung festhält.

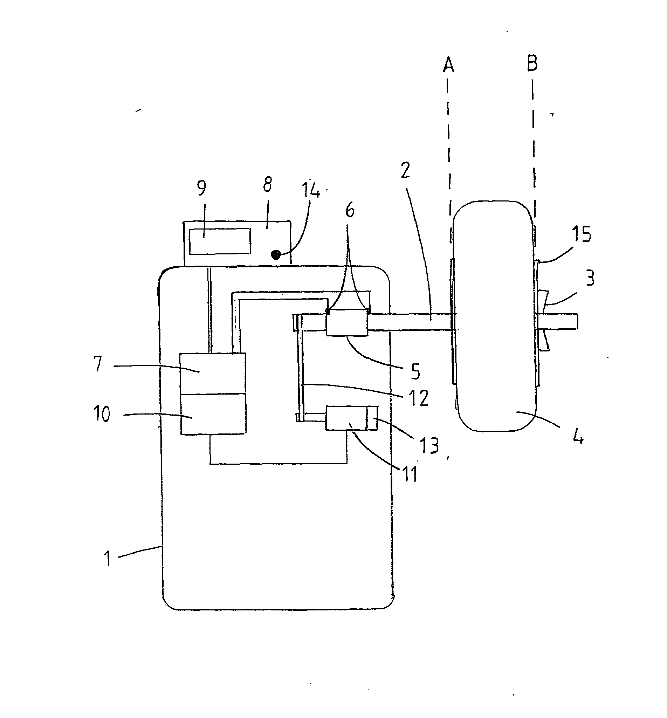

Ein Ausführungsbeispiel der Erfindung wird im folgenden an Hand der beigefügten Zeichnung näher beschrieben und erläutert.

Die einzige Figur zeigt eine erfindungsgemäße Vorrichtung mit einem Gehäuse 1 und einer aus dem Gehäuse ragenden Spindel 2 mit einer Spannvorrichtung 3 für ein auszuwuchtendes Rad 4, wobei die Spindel 2 in einer Spindelhülse 5 gelagert ist, an der zwei Sensoren 6 die durch eine Unwucht des Rades 4 erzeugten Lagerkräfte messen. Die Sensoren 6 geben die gemessenen Signale an eine Auswerte- und Anzeigeeinrichtung 7 weiter, wo die Unwucht und die sich daraus ergebenden optimalen Ausgleichsgewichtsmassen und -orte berechnet werden. Die Auswerte- und Anzeigeeinrichtung 7 ist einem Bedienfeld 8 mit einem Display 9 zugeordnet. Außerdem steht sie in Wirkverbindung mit einer Steuereinheit 10 für einen Gleichstrom-Elektromotor 11, welcher über einen Riemen 12 die Spindel 2 antreibt. Der Motor 11 ist mit einer von der Steuereinheit 10 ansteuerbaren Feststellbremse 13 versehen, die durch Betätigen einer Taste 14 im Bedienfeld 8, die über die Auswerte- und Anzeigeeinrichtung 7 auf die Steuereinheit 10 wirkt, gelöst werden kann.

Die Funktionsweise dieser Vorrichtung ist die folgende: Nach Aufsetzen des Rades 4 auf die Spindel 2 und Festlegen desselben mittels der Spannvorrichtung 3 versetzt der Motor 11 die Spindel 2 in Rotation. Sobald das Rad 4 eine vorgegebene Drehzahl erreicht hat, berechnet die Auswerte- und Anzeigeeinrichtung 7 aus den von den Sensoren 6 gemessenen Lagerkräften die Unwucht des Rades 4. Aufgrund der gegebenen Randbedingungen, also der Lage von zwei Auswuchtebenen A und B an der Innenseite und der Außenseite des Rades 4 sowie des radialen Abstands des Felgenrandes 15 von der Spindelachse, rechnet die Auswerte- und Anzeigeeinrichtung 7 die Masse und die Winkelstellung zweier zweier am Felgenrand 15 in den Auswuchtebenen A und B anzubringenden Ausgleichsgewichte aus und zeigt dies im Display 9 an.

Gemäß der vorliegenden Erfindung wird nach Abschluss dieses Mess- und Auswertevorgangs das Rad 4 in eine Winkelstellung gedreht, in der das erste Ausgleichsgewicht in der Auswuchtebene A am Felgenrand 15 angebracht werden muss. Dort wird das Rad 4 automatisch mittels der Feststellbremse 13 festgehalten. Nachdem der Bediener das entsprechende Ausgleichsgewicht angebracht hat, betätigt er die Taste 14, worauf das Rad 4 automatisch in diejenige Winkelstellung gedreht und dort mittels der Feststellbremse 13 festgehalten wird, in der ein zweites Ausgleichsgewicht in der Auswuchtebene B am Felgenrand 15 angebracht werden soll. Durch nochmaliges Betätigen der Taste 14 wird der Motor 11 und damit die Spindel 2 wieder freigegeben, so dass das Rad 4 nach Lösen der Spannvorrichtung 3 von der Spindel 2 abgenommen werden kann.

## Patentansprüche

1. Vorrichtung zum Auswuchten eines Fahrzeugrades, mit einer Spindel (2) zum Aufstecken eines auszuwuchtenden Rades (4), mit einem Motor (11) zum Antrieb der Spindel (2), um ein Rotieren des Rades (4) zu bewirken, mit einer der Spindel (2) zugeordneten Messeinrichtung (5, 6) zum Messen einer etwa vorhandenen Unwucht während des Rotierens des Rades (4), mit einer Auswerte- und Anzeigeeinrichtung (7) zum Berechnen und Anzeigen der Unwucht und/oder der am Rad (4) anzubringenden Ausgleichsgewichte, sowie mit einer Steuereinheit (10) zum Steuern des Motors (11),
**dadurch gekennzeichnet,**
**dass** der Motor (11) mit einer von der Steuereinheit (10) betätigbaren Feststellbremse (13) versehen ist, und dass die Steuereinheit (10) solcherart mit der Auswerte- und Anzeigeeinrichtung (7) zusammenwirkend ausgebildet ist, dass sie mittels des Motors (11) das Rad (4) nach dem Messvorgang in eine zum Anbringen eines Ausgleichsgewichts definierte Winkelstellung fährt und das Rad (4) dort mittels der Feststellbremse (13) festhält.

2. Vorrichtung nach Anspruch 1,
**dadurch gekennzeichnet,**
**dass** die Steuereinheit (10) solcherart mit der Auswerte- und Anzeigeeinrichtung (7) zusammenwirkend ausgebildet ist, dass sie das Rad (4) nach dem Anbringen eines ersten Ausgleichsgewichts in eine zum Anbringen eines zweiten Ausgleichsgewichts definierte Winkelstellung fährt und das Rad (4) dort mittels der Feststellbremse (13) festhält.

3. Vorrichtung nach einem der Ansprüche 1 oder 2,
**dadurch gekennzeichnet,**
**dass** die Auswerte- und Anzeigevorrichtung (7) mit einem Bedienfeld (8) versehen ist, auf welchem eine Taste (9) zum Lösen der Feststellbremse (13) vorhanden ist.

4. Vorrichtung nach einem der Ansprüche 1 bis 3,
**dadurch gekennzeichnet,**
**dass** der Motor (11) ein Gleichstrom-Elektromotor mit Arretierungsfunktion ist.
